# EUROPÄISCHE PATENTANMELDUNG

(11) **EP 0 561 338 A1**
(43) Veröffentlichungstag der Anmeldung: **22.09.1993**
(21) Anmeldenummer: 93104244.4
(22) Anmeldetag: 16.03.1993
(51) Int. Cl.: A22B 1/00, A22B 5/02

(54) **Vorrichtung zur Versperrung des Durchgangs für Schlachttiere**

(30) Priorität: 16.03.1992 DE 4208387
(71) Anmelder: BANSS MASCHINENFABRIK GmbH & CO. KG, D-35216 Biedenkopf (DE)
(72) Erfinder: Koch, Hermann, W-3554 Gladenbach-Sinkershausen (DE)
(74) Vertreter: Klunker . Schmitt-Nilson . Hirsch

(57) **Zusammenfassung**

Vorrichtung zum Versperren des Durchgangs (Sperrvorrichtung) für Schlachttiere, insbesondere Schweine, in Schlachttiergängen oder Schlachttieraufnahmebereichen, insbesondere in einem zu einer Betäubungseinrichtung führenden Treibgang, mit zumindest einem in den Schlachttiergang einbringbaren, von einer Öffnungsstellung in eine Schließstellung bringbaren, als Rolleneinrichtung 30, 31 ausgeführten Sperrglied mit zumindest einer Rolle 34 oder 35, wobei ein sich bei Kontakt des Sperrglieds mit einem Schlachttier ergebender Kontaktbereich von einem Umfangsbereich der Rolle 34 oder 35 gebildet ist.

## Beschreibung

Die vorliegende Erfindung betrifft eine Vorrichtung zum Versperren des Durchgangs (Sperrvorrichtung) für Schlachttiere, insbesondere Schweine, in Schlachttiergängen oder Schlachttieraufnahmebereichen, insbesondere in einem zu einer Betäubungseinrichtung führenden Treibgang.

Insbesondere in Treibgängen, die zu Betäubungseinrichtungen, etwa einem Restrainer oder einer Betäubungsfalle, führen, erweist es sich als notwendig, die Schlachttiere vor Eintritt in die Betäubungseinrichtung zu vereinzeln, d.h. die ungeordnet durch den Treibgang der Betäubungseinrichtung zugeführten Schlachttiere durch vorgegebene Abstände voneinander zu trennen, damit alle Schlachttiere ordnungsgemäß in der Betäubungseinrichtung betäubt werden können.

Beim Einsatz der bisher bekannten Sperrvorrichtungen kommt es häufig vor, daß Schlachttiere, die sich beim Schließen der Sperrvorrichtung in deren Wirkungsbereich befinden, zwischen die Sperrvorrichtung und die Treibgangbegrenzung geraten und eingeklemmt werden. Als Folge hiervon können Verletzungen auftreten, die dem betroffenen Schlachttier Schmerz bereiten und die Fleischqualität des Schlachttiers nachteilig beeinflussen. Selbst wenn durch die Einklemmung dem Schlachttier keine Fleisch- oder Knochenschäden zugefügt werden, ist insbesondere bei Schweinen der nachteilige Effekt zu beobachten, daß es infolge des in der Einklemmsituation auftretenden starken Stresses zu einem unter dem Begriff "PSE-Bildung" bekannten Phänomen kommt, das sich als nachteilige Veränderung der Fleischqualität bemerkbar macht.

Aufgabe der vorliegenden Erfindung ist es daher, eine Sperrvorrichtung vorzuschlagen, die eine für die Schlachttiere weitestgehend schonende Absperrung von Schlachttiergängen oder Schlachttieraufnahmebereichen ermöglicht.

Diese Aufgabe wird durch die Merkmale des Anspruchs 1 gelöst.

Die erfindungsgemäße Sperrvorrichtung weist als Sperrglied eine Rolleneinrichtung auf, die von einer Öffnungsstellung, in der der Durchgang freigegeben ist, in eine Schließstellung, in der Durchgang für die Schlachttiere versperrt ist, gebracht werden kann. Die Rolleneinrichtung weist zumindest eine Rolle auf, deren Umfangsbereich im Falle eines Kontaktes mit einem im Bereich der Rolleneinrichtung befindlichen Schlachttieres den Kontaktbereich zwischen dem Schlachttier und dem Sperrglied bildet.

Die Anordnung einer Rolle in der als Sperrglied fungierenden Rolleneinrichtung ermöglicht es einem in eine Einklemmsituation gekommenen Schlachttier, sich selbst bei bereits am Schlachttier anliegenden Sperrglied in einem Übergangsbereich vor Erreichen der Schließstellung durch das Sperrglied noch relativ zum Sperrglied zu bewegen, ohne daß es zu Verletzungen kommen kann. Da der Kontaktbereich zwischen dem Sperrglied und dem Schlachttier durch einen Umfangsbereich der Rolle gebildet ist, ist eine Relativbewegung des Schlachttiers gegenüber dem Sperrglied möglich, ohne daß es zu einem Längsgleiten oder Schaben des Sperrglieds auf der Schlachttierhaut kommt. Infolge der Drehbarkeit der Rolle ist die Relativbewegung zwischen dem Schlachttier und dem Sperrglied als eine das Schlachttier schonende Rollbewegung ausgeführt.

Verletzungen des Schlachttiers, wie sie typischerweise dann auftreten, wenn das Schlachttier noch so gerade durch die sich schließende Sperrvorrichtung hindurchschlüpft, werden in jedem Fall durch das als Rolleneinrichtung ausgeführte Sperrglied vermieden.

Eine weitergehende Vermeidung von Verletzungen der Schlachttiere kann dadurch erreicht werden, daß gemäß einer vorteilhaften Ausführung der erfindungsgemäßen Vorrichtung die Rolleneinrichtung mit einer diese von der Schließstellung in die öffnungsstellung bringbaren, in ihrer Wirkung nachgiebigen Krafteinrichtung versehen ist. Die nachgiebige Gestaltung der Krafteinrichtung ermöglicht ein Ausweichen des Sperrglieds unter dem Widerstand des Schlachttierkörpers. Dabei ist die Nachgiebigkeit der Krafteinrichtung so bemessen, daß die Kraftwirkung natürlich in jedem Fall ausreichend groß ist, um das Schlachttier durch das Sperrglied zurückzuhalten, so daß trotz der nachgiebigen Gestaltung der Krafteinrichtung die Sperrfunktion gewahrt bleibt. Eine besonders vorteilhafte Möglichkeit, die Krafteinrichtung nachgiebig zu gestalten, ist, für die Krafteinrichtung eine pneumatisch betätigte Kolben-/Zylinder-Einrichtung vorzusehen. Aufgrund der Kompressibilität des Mediums Luft ist eine derart ausgebildete Krafteinrichtung schon von Haus aus mit einer gewissen Nachgiebigkeit versehen. Darüber hinaus ist es natürlich bei einer pneumatisch betätigten Kolben-/Zylinder-Einrichtung besonders leicht möglich, durch entsprechende Vorgabe des Arbeitsdrucks, die auf das Sperrglied, also die Rolleneinrichtung, wirkende Schließkraft so einzustellen, daß die Schlachttiere nicht verletzt werden können, aber dennoch durch die entgegenwirkende Kraft vom Durchgang abgehalten werden.

Als besonders vorteilhaft erweist es sich, wenn etwa die pneumatisch betätigte Kolben-/Zylinder-Einrichtung als Betätigungseinrichtung zum Öffnen und/oder Schließen des Durchgangs ausgebildet ist. Hierdurch sind zwei Funktionen, nämlich sowohl die nachgiebig gestaltete Krafteinwirkung auf die in der Schließstellung befindliche Rolleneinrichtung, als auch das Öffnen und/oder Schließen des Sperrglieds, also der Rolleneinrichtung, mit ein und derselben Einrichtung durchführbar.

Die Betätigungseinrichtung kann mit einer das öffnen bzw. Schließen auslösenden Steuerungseinrichtung versehen sein, so daß das Öffnen und Schließen etwa in Abhängigkeit vom Vorhandensein eines Schlachttieres und dem Bedarf der Zubringung eines Schlachttieres durch entsprechend angeordnete und ausgebildete Sensoren gesteuert erfolgen kann.

Bei einer alternativen Ausführungsform der erfindungsgemäßen Vorrichtung besteht die Krafteinrichtung aus einer Federeinrichtung. Die Federeinrichtung ist dabei so angeordnet, daß sie einem Verschwenken der Rolleneinrichtung in Durchgangsrichtung aus der Schließstellung in die Öffnungsstellung der Rolleneinrichtung entgegenwirkt. Bei dieser alternativen Ausführungsform handelt es sich quasi um eine Rücklaufsperre, bei der eine Sperrwirkung nur entgegen der Durchgangsrichtung gegeben ist, in Durchgangsrichtung die Rolleneinrichtung jedoch durch die Schlachttiere frei passierbar ist. Das Schlachttier kann also entgegen der entsprechend gering eingestellten Federwirkung die Rolleneinrichtung in Durchgangsrichtung in die Öffnungsstellung bewegen, wobei nach Durchtritt des Schlachttiers durch die Sperrvorrichtung die Rolleneinrichtung unter Einwirkung der Feder wieder in die Schließstellung zurückgeführt wird und somit ein Zurücklaufen des Schlachttieren verhindert wird.

Bei beiden alternativen Ausführungsformen der erfindungsgemäßen Vorrichtung, also der vorzugsweise durch die Kolben-/Zylinder-Einrichtung betätigten richtungsunabhängig wirksamen Sperrvorrichtung und der entgegen der Wirkung einer Federeinrichtung in Durchgangsrichtung betätigbaren, als Rücklaufsperre ausgeführten Sperrvorrichtung erweist es sich als besonders vorteilhaft, zwei, jeweils um eine aufrechte Achse (Schwenkachse) verschwenkbare Rolleneinrichtungen mit aufrechte Rollenachsen aufweisenden Rollen einander gegenüberliegend anzuordnen. Hierdurch ergibt sich im Falle des Kontakts eines Schlachttieres mit der Sperrvorrichtung auf beiden Seiten des Schlachttieres ein für das Schlachttier schonender Rollenkontakt.

Jede Rolleneinrichtung kann mit zwei Rollen versehen sein, die in in den Schlachttiergang eingeschwenktem Zustand (Schließstellung) den Durchgang in Durchgangsrichtung gesehen V-förmig verengen. Diese Ausführungsvariante ermöglicht eine besonders vorteilhafte Anpassung der Rolleneinrichtungen an die sich in Längsrichtung des Schlachttieres ändernde Querschnittskontur. Die in Durchgangsrichtung vorderen beiden Rollen der einander gegenüberliegenden Rolleneinrichtung sind dabei näher zueinander angeordnet, als die in Durchgangsrichtung gesehen hinteren beiden Rollen der Rolleneinrichtung. Der zwischen den vorderen Rollen geschaffene verengte Zwischenraum bildet dabei eine geeignete Aufnahme für den Hals-/Kopfbereich des Schlachttieres, wohingegen der zwischen den hinteren beiden Rollen ausgebildete Zwischenraum eine geeignete Aufnahme für die breiteren Körperpartien des Schlachttieres bildet. Diese Anpassung der Sperrvorrichtung an die Körperkontur ermöglicht eine für das Schlachttier besonders schonende Absperrung.

Bei einer Verwendung der erfindungsgemäßen Sperrvorrichtung als rückwärtige Absperrung eines als Betäubungsfalle ausgebildeten Schlachttieraufnahmebereichs erweist es sich als besonders vorteilhaft, wenn die geschilderte V-förmige Anordnung der Rolleneinrichtungen in deren Schließstellung entgegen der Durchgangsrichtung gegeben ist. Hierdurch schmiegen sich die jeweils zwei Rollen der Rolleneinrichtungen an das Hinterteil eines in die Betäubungsfalle eingetretenen Schlachttiers in besonders vorteilhafter Weise an. Gleichzeitig kann durch die die Rolleneinrichtungen in die Schließstellung verschwenkenden Kolben-/Zylinder-Einrichtungen Druck auf das Hinterteil des Schlachttieres ausgeübt werden, so daß eine gute Immobilisierung des Schlachttieres in der Betäubungsfalle erreicht wird.

Unabhängig von der gewählten Ausführungsform können die Rolleneinrichtung oder die Rolleneinrichtungen der erfindungsgemäßen Vorrichtung in ihrer Schließstellung so angeordnet sein, daß eine Sichtöffnung in der Sperrvorrichtung verbleibt. Hierdurch wird insbesondere der stressempfindlichen Psyche von Schweinen Rechnung getragen, da sich der durch die Sperrvorrichtung hindurch mögliche Sichtkontakt vorteilhaft auf das Wohlbefinden von Schweinen auswirkt.

Zusätzlich zu der bereits genannten, in bezug auf die Durchgangsöffnung oder entgegen dieser gegebenen V-förmigen Anordnung der Rollen der Rolleneinrichtungen besteht auch die Möglichkeit, die jeweils zwei einander gegenüberliegend angeordneten Rollen der beiden Rolleneinrichtungen so anzuordnen, daß in einer aufrechten Durchgangsebene, also etwa in Durchgangsrichtung von hinten betrachtet, ihre Rollenachsen V-förmig zueinander angeordnet sind. Hierdurch läßt sich eine weitere Verbesserung der Anpassung der Rolleneinrichtungen an die Körperkontur der Schlachttiere, insbesondere von Schweinen, erreichen.

Bei der erfindungsgemäßen Sperrvorrichtung besteht auch die Möglichkeit, zumindest eine Rolle einer Rolleneinrichtung anzutreiben. Dies gilt sowohl für den Fall, daß lediglich eine Rolleneinrichtung als Sperrglied vorgesehen ist, als auch für den Fall, daß zwei einander gegenüberliegende Rolleneinrichtungen als Sperrglied vorgesehen sind. Durch den Rollenantrieb wird es den in eine Einklemmsituation kommenden Schlachttieren erleichtert, aus dem Bereich des Sperrglieds bzw. der Sperreinrichtung herauszukommen.

Insbesondere bei Verwendung der erfindungsgemäßen Vorrichtung als Rücklaufsperre kann es sich als vorteilhaft erweisen, wenn zumindest eine Rolle einer Rolleneinrichtung mit einer eine Rollendrehung entgegen der Durchlaufrichtung verhindernden Einrichtung (Drehsperre), vorzugsweise einer Freilaufeinrichtung, versehen ist. Hierdurch wird verhindert, daß ein bei Schließung der Sperrvorrichtung bereits in dessen Bereich vorgedrungenes Schlachttier durch eine Drehung der Rolle oder Rollen entgegen der Durchgangsrichtung wieder in den Bereich vor der Rücklaufsperre zurückgelangen kann.

Durch eine mögliche Profilierung der drehrichtungsabhängig drehbaren Rolle oder Rollen wird verhindert, daß der Effekt der Drehsperre durch ein Entlanggleiten des Schlachttierkörpers an der Rolle oder den Rollen entgegen der Durchgangsrichtung aufgehoben wird.

Eine vorteilhafte Variante des konstruktiven Aufbaus der erfindungsgemäßen Sperrvorrichtung besteht darin, jede Rolleneinrichtung aus einem Schwenkrahmen mit zumindest einer darin gelagerten Rolle zu bilden, wobei der Schwenkrahmen seitlich in einem den Schlachttierdurchgang begrenzenden Außenrahmen schwenkbar angeordnet ist. Die Abmessungen des Außenrahmens lassen sich auf einfache Art und Weise an die Querschnittsabmessungen des Schlachttiergangs, in dem die Sperrvorrichtung angeordnet werden soll, anpassen. Hierbei kann vorgesehen werden, die durch den Außenrahmen begrenzte Sperrvorrichtung in einen Schlachttiergang einzusetzen, also zwischen den Längswandungen des Schlachttiergangs anzuordnen. Darüber hinaus besteht aber auch die Möglichkeit, den Außenrahmen der Sperrvorrichtung so zu bemessen, daß er zwischen zwei Teilstücken eines Schlachttiergangs quasi als Zwischenstück eingefügt werden kann. So können die Rolleneinrichtungen bei schwenkbarer Anordnung zur Öffnung der Sperrvorrichtung in die Flucht der Schlachttiergangwandungen eingeschwenkt werden, so daß bei geöffneter Sperrvorrichtung keine Engstelle im Schlachttiergang entsteht.

Selbst bei zwischen die Wandungen eines Schlachttierganges eingesetzter Sperrvorrichtung ist deren Raumbedarf möglichst klein, da der Außenrahmen der Sperrvorrichtung mit Seitenrahmenteilen versehen sein kann, die in Öffnungsstellung der Rolleneinrichtung diese in sich aufnehmen.

Ein weiterer Beitrag zur vorstehend beschrieben, kompakten Bauweise der Sperrvorrichtung kann dadurch erfolgen, daß die zumindest eine für jede Rolleneinrichtung vorgesehene Krafteinrichtung zum einen an einer Rolleneinrichtung und zum andern an einem außen am Seitenrahmen angeordneten Rahmenausleger angelenkt ist. Hierdurch stellt die erfindungsgemäße Sperrvorrichtung eine eigenständig zu handhabende Moduleinheit dar, die zusammen mit den zur Betätigung benötigten Einrichtungen beliebig angeordnet werden kann.

Die erfindungsgemäße Sperrvorrichtung wird nachfolgend anhand der Zeichnungen näher erläutert. Es zeigen:
- Fig. 1: eine am Ende eines einem Restrainer vorgeordneten Treibgangs angeordnete erfindungsgemäße Sperrvorrichtung;
- Fig. 2: eine Draufsicht auf die gemäß Fig. 1 angeordnete Sperrvorrichtung;
- Fig. 3: eine perspektivische Darstellung der in Fig. 2 dargestellten Sperrvorrichtung;
- Fig. 4: eine Draufsicht auf die Sperrvorrichtung gemäß Fig. 2 in Teilschnittdarstellung;
- Fig. 5: eine Schnittansicht der in Fig. 4 dargestellten Sperrvorrichtung gemäß Schnittlinienverlauf V-V;
- Fig. 6: eine als rückwärtige Absperrung in einer Betäubungsbox eingesetzte Sperrvorrichtung;
- Fig. 7: die in die Betäubungsbox eingesetzte Sperrvorrichtung in einer Draufsicht;
- Fig. 8: eine Ausführungsvariante der erfindungsgemäßen Sperrvorrichtung.

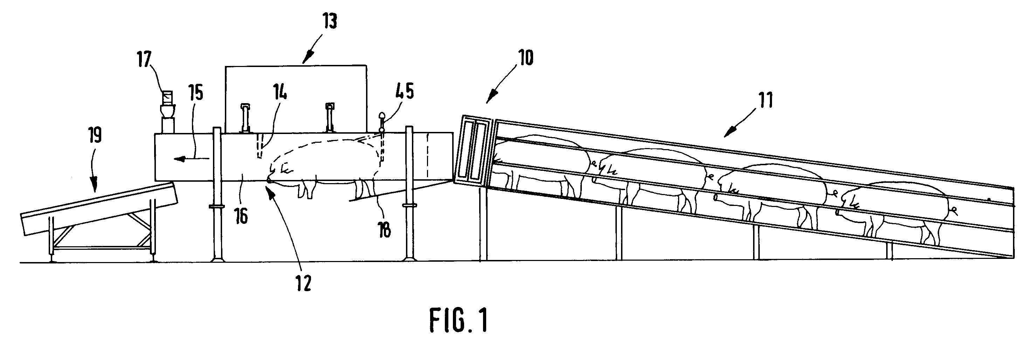

Fig. 1 zeigt eine Sperrvorrichtung 10, die am Ende eines Treibgangs 11 im Eingangsbereich zu einem Restrainer 12 angeordnet ist. Der Restrainer 12 dient zur Immobilisierung der durch die Sperrvorrichtung 10 hindurchgetretenen Schweine, um diese, wie in Fig. 1 dargestellt, in immobilisiertem Zustand mittels einer Betäubungseinrichtung 13 betäuben zu können.

Die Betäubungseinrichtung 13 weist ein zusammen mit dem Schwein im Restrainer 12 längsbewegbar angeordnetes Elektrodenpaar 14 auf, das zur Betäubung des Schweins an dessen Kopf- oder Halsbereich in Ansatz gebracht wird. Nach der erforderlichen Einwirkungsdauer des elektrischen Stroms wird das Elektrodenpaar 14 mit einem hier nicht näher dargestellten Schlitten rasch entgegen der Förderrichtung des Restrainers 12, die durch den Pfeil 15 angedeutet ist, zurückgefahren, damit das Elektrodenpaar 14 wieder am Ausgangspunkt seiner Bewegung ist, wenn das nächste Schlachttier im Restrainer 12 zur Betäubung herankommt.

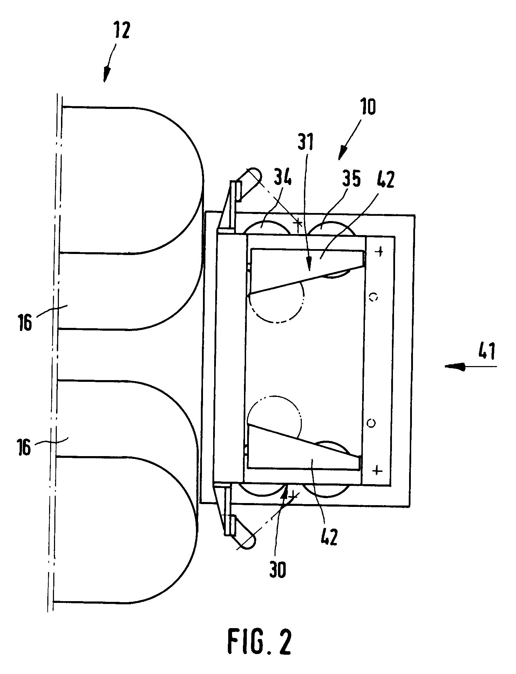

Der Restrainer 12 weist zwei endlose, wie in Fig. 2 dargestellt, V-förmig zueinander angeordnete Förderbänder 16 auf, die über einen Antriebsmotor 17 angetrieben werden. Im Anfangsbereich des Restrainers 12 ist ein abfallender Boden 18 angeordnet, so daß ein durch die Sperrvorrichtung 10 hindurchtretendes Schwein beim Eintreten in den Restrainer 12 allmählich den Boden unter den Füßen verliert und durch das Eigengewicht gegen die zueinander schräggestellten Förderbänder 16 gepreßt und durch diese längsgefördert wird. Am Ende des Restrainers 12 ist eine Rutsche 19 angeordnet, die zur Aufnahme der betäübten Schweine dient. Das darauf folgende Abstechen der Schweine und deren Weiterverarbeitung ist, da nicht Gegenstand der Erfindung, im weiteren nicht dargestellt.

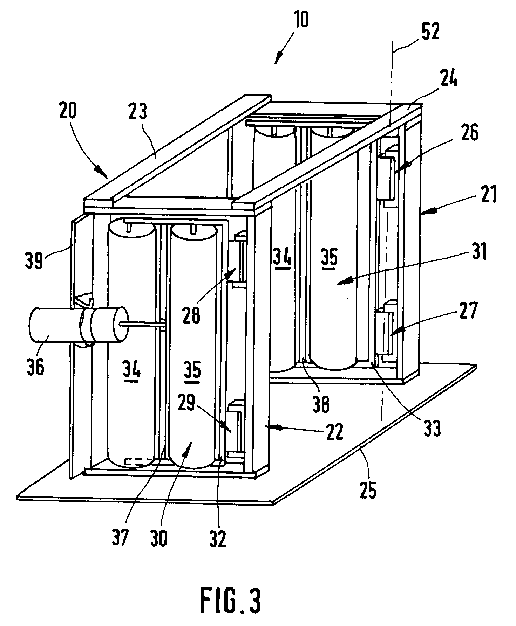

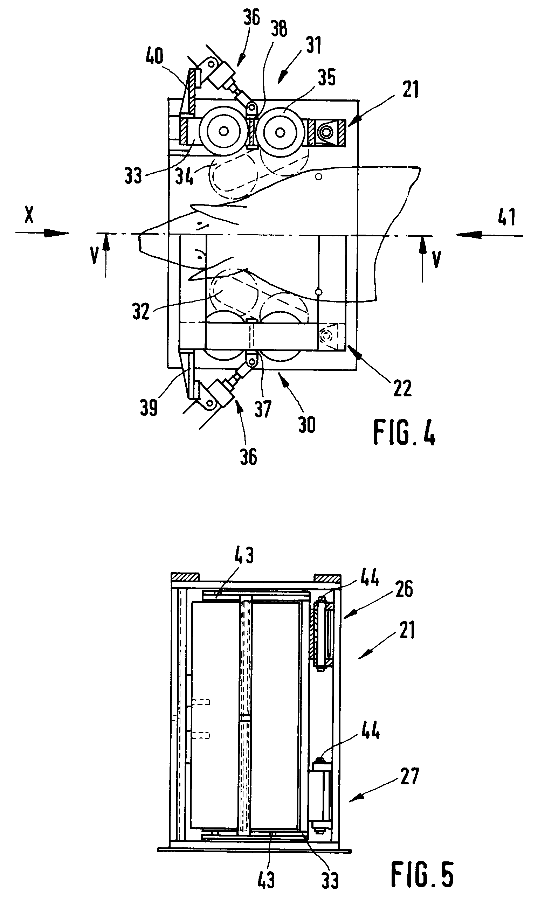

Fig. 2 zeigt die im Eingangsbereich zum Restrainer 12 angeordnete Sperrvorrichtung 10 in einer Draufsicht. Die folgenden Erläuterungen beziehen sich im übrigen auch auf die Figuren 3 und 4. Aus der perspektivischen Darstellung der Sperrvorrichtung 10 in Fig. 3 wird besonders deutlich, daß die am Ende des Treibgangs 11 vor dem Restrainer 12 angeordnete Sperrvorrichtung 10 eine portalartig ausgebildete Verlängerung des Treibgangs 11 bildet, durch die die Schweine zum Betreten des Restrainers hindurchtreten müssen. Die Sperrvorrichtung 10 stellt eine unabhängig zu handhabende modulare Einheit dar, die auf einfache Art und Weise in eine bereits bestehende Anordnung aus einem Restrainer 12 und einem Treibgang 11 eingefügt werden kann.

Die Sperrvorrichtung 10 besteht aus einem Außenrahmen 20, der zwei einander gegenüberliegend angeordnete Seitenrahmenteile 21, 22 aufweist, die bei dem hier dargestellten Ausführungsbeispiel der Sperrvorrichtung 10 oben durch zwei Traversen 23, 24 und unten durch ein Standblech 25 verbunden sind.

In den Seitenrahmenteilen 21, 22 sind um eine Schwenkachse 52 bildende Schwenkgelenke 26, 27; 28, 29 schwenkbare Rolleneinrichtungen 30, 31 angeordnet. Diese bestehen aus mit den Schenkgelenken 26 bis 29 verbundenen Schwenkrahmen 32, 33, die jeweils zwei in diesen um aufrechte Rollenachsen 42 drehende Rollen 34, 35 aufweisen. Auf die Rolleneinrichtungen 30 wirkt jeweils eine, in dem hier dargestellten Ausführungsbeispiel als Kolben-/Zylindereinheit ausgeführte Krafteinrichtung 36, die zum einen an eine Querstrebe 37 bzw. 38 des Schwenkrahmens 32 bzw. 33 und zum anderen an jeweils seitlich nach außen von den Seitenrahmenteilen 21, 22 abstehende Auslegerrahmenteile 39, 40 angelenkt ist.

Die als pneumatisch betätigbare Kolben-/Zylinder-Einheiten ausgeführten Krafteinrichtungen 36 dienen bei dem in Fig. 3 dargestellten Ausführungsbeipiel sowohl zum Verschwenken der Rolleneinrichtungen 30, 31 von einer Öffnungsstellung in eine, etwa in den Figuren 2 und 4 strichpunktiert dargestellte Schließstellung und umgekehrt, als auch zur Erzeugung der Schließkraft, die notwendig ist, um eine Öffnungsbewegung der Rolleneinrichtungen 30, 31 infolge eines in Richtung des in Fig. 2 mit 41 bezeichneten Pfeils gegen die Rolleneinrichtungen 30, 31 drückenden Schweins zu verhindern.

Wie insbesondere aus der Darstellung in Fig. 4 zu ersehen ist, werden die Rolleneinrichtungen 30, 31 bzw. die darin aufgenommenen Rollen 34, 35 in ihrer Öffnungsstellung im wesentlichen von den Seitenrahmenteilen 21, 22 aufgenommen und ragen nur unwesentlich über diese seitlich hervor. Bei entsprechend breiter Ausführung der Seitenrahmenteile 21, 22 ist es natürlich möglich, daß die Rolleneinrichtungen 30, 31 vollständig von den Seitenrahmenteilen 21, 22 aufgenommen werden.

In Fig. 4 sind die Rollen 34, 35 der Rolleneinrichtungen 30, 31 in Schließstellung V-förmig angeordnet, so daß sich eine für die Schweine nicht passierbare Verengung in der durch den Pfeil 41 gekennzeichneten Laufrichtung der Schweine ergibt. Selbst in Schließstellung der Rolleneinrichtungen 30, 31 verbleibt zwischen den vorderen, den engeren Abstand voneinander aufweisenden Rollen 34 ein ausreichender Abstand, um die Sicht von einem im Weitergehen durch die Sperrvorrichtung 10 blockierten Schwein zu einem jenseits der Sperrvorrichtung 10 befindlichen Schwein, das diese bereits passiert hat, freizugeben.

Wie in Fig. 4 dargestellt, ist der sich in Durchlaufrichtung 41 verengende Abstand zwischen den Rollen 34 und den Rollen 35 so bemessen, daß in Schließstellung der Rolleneinrichtungen 30, 31 ein durch die Sperrvorrichtung 10 im Weitergehen blockiertes Schwein mit seinem Kopf-/Halsbereich zwischen die Rollen 34 und seinem demgegenüber verbreiterten Vorderschinkenbereich zwischen die Rollen 35 paßt, ohne eingeklemmt zu werden. Aufgrund der V-förmigen Anordnung der Rollen 34, 35 ist die Sperrvorrichtung 10 an die im wesentlichen von oben gesehen keilförmig ausgebildete Vorderhälfte des Schweins angepaßt, so daß sich die Sperrwirkung der Sperrvorrichtung 10 durch den sich zwischen dem Körper des Schweins und den Rolleneinrichtungen 30, 31 ergebenden Formschluß ergibt.

Durch die drehbar in den Rolleneinrichtungen 30, 31 angeordneten Rollen 34, 35 wird verhindert, daß sich zwischen dem Körper des Schweins und dem schräg zu diesem angeordneten Rolleneinrichtungen 30, 31 eine Keilhemmung ergibt, die zu Verletzungen des Schweins führen kann. Die drehbaren Rollen ermöglichen es dem Schwein, sich entgegen der Laufrichtung 41 aus dem Bereich der Sperrvorrichtung 10 zurückzuziehen. Somit wird durch die erfindungsgemäße Sperrvorrichtung 10 eine sichere Sperrwirkung ermöglicht, ohne daß damit die Gefahr des Einklemmens eines Schweins in der Sperrvorrichtung 10 mit den sich daraus nachteilig ergebenden Folgen gegeben wäre.

Um den Kontakt der Rollen 34, 35 mit dem Schwein möglichst schonend zu gestalten, können die Rollen mit einem hautfreundlichen Überzug oder eine entsprechenden Beschichtung, wie beispielsweise Gummi, versehen sein.

Um zu verhindern, daß möglicherweise in der Schließstellung der Rolleneinrichtungen 30, 31 zwischen diese und den Seitenrahmenteilen 21, 22 geratene Gegenstände eine nachfolgende Öffnungsbewegung der Rolleneinrichtungen 30, 31 blockieren, sind auf den Seitenrahmenteilen 21, 22, wie in Fig. 2 dargestellt, Abdeckbleche 42 angeordnet. Aus dem vorstehenden ergibt sich, daß die Abdeckbleche 42 natürlich auch zur Verhinderung von Verletzungen des Bedienungspersonals sowie der durch die Sperrvorrichtung 10 geleiteten Schweine dienen.

Fig. 5 zeigt zur weitergehenden Erläuterung der Anbringung der Rolleneinrichtungen 30, 31 in den Seitenrahmenteilen 21, 22 eine innere Seitenansicht des Seitenrahmenteils 21. Aus Fig. 5 ist zu ersehen, wie die Rollen 34, 35 mit ihren Rollenachsen 43 im Schwenkrahmen 32 aufgenommen sind. Die Schwenkgelenke 26, 27 sind als scharnierartig ausgebildete Drehzapfengelenke mit Drehzapfen 44 vorgesehen.

Die Steuerung der erfindungsgemäßen Sperrvorrichtung 10 kann, wie beispielhaft in Fig. 1 dargestellt, mittels eines Kontakthebels 45 erfolgen, der etwa ein pneumatisches Schaltventil zur Ansteuerung der als Kolben-/Zylinder-Einheiten ausgeführten Krafteinrichtungen 36 betätigt. Bei durch den Körper des Schweins umgelegtem Kontakthebel 45, also bei einem durch ein Schwein belegten Restrainer 12, wird so die Sperrvorrichtung 10 in Schließstellung gehalten. Nachdem das im Restrainer 12 befindliche Schwein den Kontakthebel 45 passiert hat, wird durch Umschwenken des Kontakthebels 45 das hier nicht näher dargestellte pneumatische Schaltventil wieder betätigt, so daß bei einer doppelwirkenden Ausführung der Kolben-/Zylinder-Einheiten 36 durch diese ein Öffnen der Sperrvorrichtung 10 erfolgen kann, damit ein nachfolgendes Schwein in den Restrainer 12 eintreten kann.

Anstelle der beispielhaft beschriebenen Steuerung der Sperreinrichtung 10 mittels eines Kontakthebels können natürlich auch andere zur Steuerung einsetzbare Einrichtungen, wie Lichtschranken und andere, vorzugsweise berührungslos arbeitende Sensoren, die ein Schließen und/oder Öffnen der Sperrvorrichtung 10 initiieren, eingesetzt werden.

Genausogut kann die Steuerung aber auch so erfolgen, daß die Rolleneinrichtungen 30, 31 der Sperrvorrichtung 10 zeitgesteuert, also etwa durch ein Zeitrelais betätigt geöffnet werden und der Schließvorgang kann in Abhängigkeit von einem durch das zu betäübende Tier ausgelösten Kontakt erfolgen.

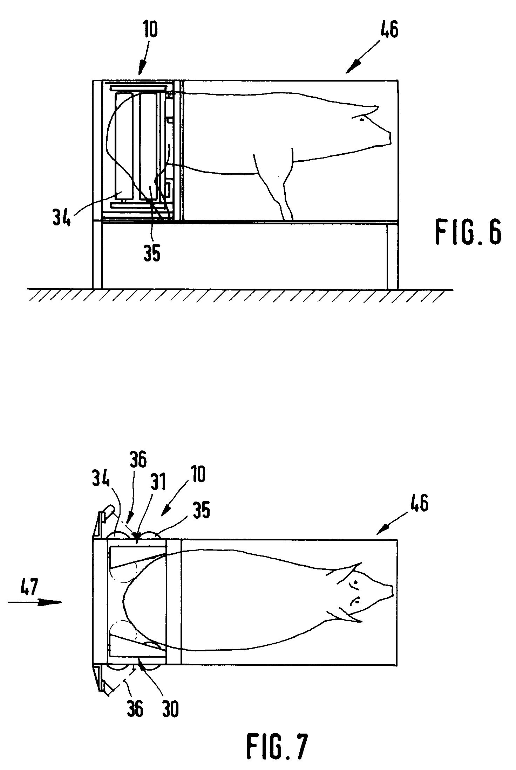

Wie in Fig. 6 dargestellt, ist es auch möglich, die erfindungsgemäße Sperrvorrichtung 10 als rückwärtige Absperrung in einer Betäubungsbox 46 zu verwenden. Fig. 7 zeigt die Betäubungsbox 46 mit der rückwärtig daran angesetzten Sperrvorrichtung 10 als Draufsicht. Im Unterschied zum Einsatz der erfindungsgemäßen Sperrvorrichtung 10 in dem zum Restrainer 12 führenden Treibgang 11 ist die Sperrvorrichtung 10 in der Betäübungsbox 46 so angeordnet, daß die Rolleneinrichtungen 30, 31 den Durchgang durch die Sperrvorrichtung 10 entgegen der durch den Pfeil 47 gekennzeichneten Laufrichtung der Schweine verengen.

Wenn sich die Rolleneinrichtungen 30, 31 in Öffnungsstellung befinden, kann das zu betäubende Schwein in die Betäübungsbox 46 eintreten. Danach werden die Rolleneinrichtungen 30, 31 in Richtung Schließstellung verschwenkt, so daß zum einen ein rückwärtiges Ausweichen des Schweins aus der Betäubungsbox verhindert wird, und zum anderen durch den Andruck der Rolleneinrichtungen 30, 31 an den hinteren Teil des Schweines, dieses nach vorn gedrängt und somit immobilisiert wird. Dabei erfolgt der Andruck durch die Rolleneinrichtungen 30, 31 im hinteren Bereich des Schweines sehr schonend, da sich die Rolleneinrichtungen 30, 31 aufgrund ihrer V-Stellung und der in ihnen eingesetzten Rollen 34, 35 im Bereich des Hinterschinkens an den Schweinekörper anschmiegen.

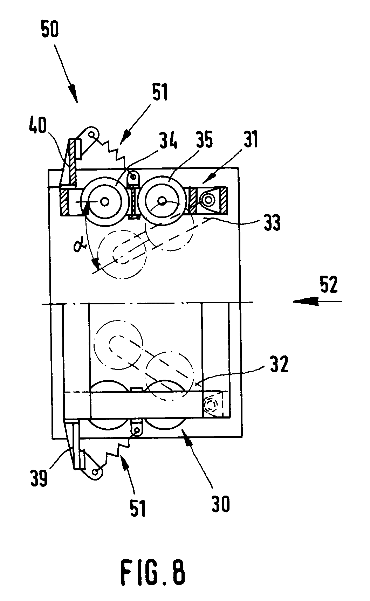

Fig. 8 zeigt als weitere Ausführungsform eine erfindungsgemäße Sperrvorrichtung 50, die bezüglich des Aufbaus mit der vorstehend umfassend erläuterten Sperrvorrichtung 10 zum größten Teil übereinstimmt. Daher sind in Fig. 8 die im Vergleich zur Sperrvorrichtung 10 gleichwirkenden bzw. gleichgestalteten Teile mit denselben Bezugszeichen versehen.

Im Unterschied zur Sperrvorrichtung 10 sind die Krafteinrichtungen 51, die zwischen den Auslegerrahmenteilen 39, 40 und den Rolleneinrichtungen 30, 31 wirksam werden, bei der Sperrvorrichtung 50 als Federeinrichtungen ausgebildet. Die Verwendung von Federeinrichtungen 51 hat zur Folge, daß die Rolleneinrichtungen 30, 31 von einer Öffnungsstellung in die Schließstellung bewegt werden und in dieser durch die Federkraft gesichert werden. Eine Öffnungsbewegung der Rolleneinrichtung 30, 31 mittels der in Fig. 8 dargestellten Federeinrichtung 51 ist jedoch nicht möglich. Für den Einsatz als Rücklaufsperre stellt die Ausführungsform gemäß Fig. 8 durch den Verzicht auf die aufwendigen Kolben-/Zylinder-Einheiten eine kostengünstige Lösung dar.

Bei Verwendung als Rücklaufsperre ist die Sperrvorrichtung 50 in einen hier nicht näher dargestellten Schlachttiergang, der beidseitig an die Sperrvorrichtung 50 anschließt, eingesetzt. Für Schweine, die aus der mit dem Pfeil 52 gekennzeichneten Richtung herkommen, ist die Sperrvorrichtung 50 unter Überwindung der auf die Rolleneinrichtungen 30, 31 wirkenden, durch die Federeinrichtungen 51 aufgebrachten Federkräfte passierbar. Nach dem Durchtritt des Schweins durch die Sperrvorrichtung 50 werden die Rolleneinrichtungen 30, 31 durch die Federeinrichtungen 51 wieder in ihre Schließstellung verschwenkt. Die Schließstellung der Rolleneinrichtungen 30, 31 ist hierbei über einen nicht näher dargestellten Schwenkrahmenanschlag bestimmt. Versucht nun ein Schwein, entgegen der Richtung 52 die Sperrvorrichtung 50 zu passieren, so werden hierdurch die Rolleneinrichtungen 30, 31 ebenso wie durch die Federeinrichtungen 51 gegen den Anschlag in die Schließstellung gedrückt.

Durch die V-förmige Anordnung der Rolleneinrichtung in Laufrichtung 52 der Schweine wird zum einen das Öffnen der Sperrvorrichtung 50 durch die Schweine erleichtert, zum anderen gestaltet sich der Öffnungskontakt für die Schweine sehr schonend. Wegen des zwischen den vorderen Rollen 34 verbleibenden Zwischenraums wird beim Öffnen zudem die empfindliche Schnauze der Schweine geschont.

Um zu vermeiden, daß durch ein entgegen der Richtung 52 gegen die Rolleneinrichtungen 30, 31 drängendes Schwein eine Öffnung der Sperrvorrichtung 50 bewirkt wird, besteht eine Möglichkeit darin, den Öffnungswinkel der Rolleneinrichtungen 30 ausreichend groß zu gestalten. Bei zu kleinem Winkel könnte es sonst passieren, daß die Rolleneinrichtungen 30, 31, unterstützt durch das Abrollen der Rollen auf dem Körper des gegendrängenden Schweins in ihre Öffnungsstellung verschwenkt werden.

Eine weitere Möglichkeit, die Sperrwirkung der Sperrvorrichtung 50 entgegen der Richtung 52 zu sichern, besteht darin, die Schwenkgelenke 26, 27 bzw. 28, 29 der Rolleneinrichtungen 30 bzw. 31 weiter nach außen zu verlegen, wobei die V-förmige Anordnung der Rolleneinrichtungen 30, 31 durch eine entsprechende Abwinkelung der Schwenkrahmen 32, 33 beibehalten werden kann.

Obwohl bei den vorstehenden Erläuterungen der erfindungsgemäßen Vorrichtung deren Anwendung nur in Verbindung mit Schweinen beschrieben wurde, ist es natürlich auch möglich, die Sperrvorrichtung bei Rindern und anderen Schlachttieren zu verwenden.

Für die Verwendung der erfindungsgemäßen Sperrvorrichtung ergeben sich vielfältige Möglichkeiten, die nicht auf den Schlachthofbereich beschränkt sind. So kann etwa die Rücklaufsperre besonders vorteilhaft zur Separierung von Tieren allgemein, also nicht nur von zur Schlachtung bestimmten Tieren, beispielsweise im Stallungsbereich, eingesetzt werden.

## Patentansprüche

1. Vorrichtung zum Versperren des Durchgangs (Sperrvorrichtung) für Schlachttiere, insbesondere Schweine, in Schlachttiergängen oder Schlachttieraufnahmebereichen, insbesondere in einem zu einer Betäubungseinrichtung führenden Treibgang, gekennzeichnet durch
zumindest ein in den Schlachttiergang (11) einbringbares, von einer Öffnungsstellung in eine Schließstellung bringbares, als Rolleneinrichtung (30, 31) ausgeführtes Sperrglied mit zumindest einer Rolle (34 oder 35),
wobei ein sich bei Kontakt des Sperrglieds mit einem Schlachttier ergebender Kontaktbereich von einem Umfangsbereich der Rolle (34 oder 35) gebildet ist.

2. Vorrichtung nach Anspruch 1, dadurch gekennzeichnet, daß die Rolleneinrichtung (30, 31) in ihrer Schließstellung durch eine einem Verbringen der Rolleneinrichtung in die Öffnungsstellung entgegenwirkende, in ihrer Wirkung nachgiebige Krafteinrichtung (36, 51) gehalten ist.

3. Vorrichtung nach Anspruch 2, dadurch gekennzeichnet, daß die Krafteinrichtung aus einer vorzugsweise pneumatisch betätigten Kolben-/Zylinder-Einrichtung (36), gebildet ist.

4. Vorrichtung nach Anspruch 2 oder 3, dadurch gekennzeichnet, daß die Krafteinrichtung (36, 51) als Betätigungseinrichtung zum Öffnen und/oder Schließen der Sperrvorrichtung (10, 50) ausgebildet ist.

5. Vorrichtung nach Anspruch 4, dadurch gekennzeichnet, daß die Betätigungseinrichtung mit einer das Öffnen und/oder Schließen auslösenden Steuerungseinrichtung versehen ist.

6. Vorrichtung nach Anspruch 2, dadurch gekennzeichnet, daß die Krafteinrichtung aus einer Federeinrichtung (51) gebildet ist, die einem Verbringen der Rolleneinrichtung (30, 31) in Durchgangsrichtung aus der Schließstellung in die Öffnungsstellung entgegenwirkt.

7. Vorrichtung nach einem oder mehreren der vorangehenden Ansprüche, gekennzeichnet durch zwei einander gegenüberliegend, jeweils um eine aufrechte Achse (Schwenkachse 52) verschwenkbare Rolleneinrichtungen (30, 31) mit aufrechte Rollenachsen (43) aufweisenden Rollen (34, 35).

8. Vorrichtung nach Anspruch 7, dadurch gekennzeichnet, daß jede Rolleneinrichtung (30, 31) zwei Rollen (34, 35) aufweist, die in in den Schlachttiergang eingeschwenktem Zustand (Schließstellung) den Durchgang in Durchgangsrichtung V-förmig verengen.

9. Vorrichtung nach Anspruch 7, dadurch gekennzeichnet, daß jede Rolleneinrichtung (30, 31) zwei Rollen (34, 35) aufweist, die in Schließstellung den Durchgang entgegen der Durchgangsrichtung V-förmig verengen.

10. Vorrichtung nach einem oder mehreren der vorangehenden Ansprüche, dadurch gekennzeichnet, daß bei in Schließstellung verschwenkter Rolleneinrichtung oder verschwenkten Rolleneinrichtungen (30, 31) eine Sichtöffnung in der Sperrvorrichtung (10, 50) verbleibt.

11. Vorrichtung nach Anspruch 8 oder 9, dadurch gekennzeichnet, daß die Rollen (34, 35) zur V-förmigen Verengung des Durchgangs in einer Ebene quer zur Durchgangsrichtung gegenüber den Schwenkachsen (52) der Rolleneinrichtungen (30, 31) geneigte Rollenachsen (43) aufweisen.

12. Vorrichtung nach einem oder mehreren der vorangehenden Ansprüche, dadurch gekennzeichnet, daß zumindest eine Rolle (34 oder 35) einer Rolleneinrichtung (30, 31) antreibbar ist.

13. Vorrichtung nach einem oder mehreren der vorangehenden Ansprüche, dadurch gekennzeichnet, daß zumindest eine Rolle (34 oder 35) einer Rolleneinrichtung (30, 31) mit einer eine Rollendrehung entgegen der Durchlaufrichtung verhindernden Einrichtung (Drehsperre), vorzugsweise einer Freilaufeinrichtung, versehen ist.

14. Vorrichtung nach Anspruch 13, dadurch gekennzeichnet, daß die mit einer Drehsperre versehene Rolle (34 oder 35) eine vorzugsweise durch Längsrillen profilierte Oberfläche aufweist.

15. Vorrichtung nach einem oder mehreren der vorangehenden Ansprüche, dadurch gekennzeichnet, daß jede Rolleneinrichtung (30, 31) aus einem Schwenkrahmen (32, 33) mit zumindest einer darin gelagerten Rolle (34, 35) besteht, der seitlich in einem den Schlachttierdurchgang begrenzenden Außenrahmen (20) schwenkbar angeordnet ist.

16. Vorrichtung nach Anspruch 15, dadurch gekennzeichnet, daß der Außenrahmen (20) zur Aufnahme der Rolleneinrichtungen (30, 31) Seitenrahmenteile (21, 22) aufweist, die in Öffnungsstellung der Rolleneinrichtung (30, 31) diese in sich aufnehmen.

17. Vorrichtung nach einem oder mehreren der vorangehenden Ansprüche, dadurch gekennzeichnet, daß an jede Rolleneinrichtung (30, 31) zumindest eine Krafteinrichtung (36, 51) angelenkt ist, die sich jeweils an einem außen an einem Seitenrahmenteil (21, 22) angeordneten Auslegerahmenteil (39, 40) abstützt.
